(19) Europäisches Patentamt / European Patent Office / Office européen des brevets

(11) **EP 3 205 394 B1**

(12) **EUROPEAN PATENT SPECIFICATION**

(45) Date of publication and mention
of the grant of the patent:
**10.01.2024 Bulletin 2024/02**

(21) Application number: **16000333.1**

(22) Date of filing: **10.02.2016**

(51) International Patent Classification (IPC):
**B01J 19/00** *(2006.01)*    **B01L 3/00** *(2006.01)*

(52) Cooperative Patent Classification (CPC):
**B01J 19/0046; B01L 3/5088;** B01J 2219/00619;
B01J 2219/00637; B01J 2219/0065;
B01J 2219/00659; B01L 2200/0647; B01L 2200/12;
B01L 2300/0816; B01L 2300/0819; B01L 2300/166

(54) **PATTERNED SUBSTRATE HAVING HYDROPHILIC AND HYDROPHOBIC AREAS AND METHOD FOR PRODUCING THE SAME**

GEMUSTERTES SUBSTRAT MIT HYDROPHILEN UND HYDROPHOBEN BEREICHEN UND VERFAHREN ZUR HERSTELLUNG DAVON

SUBSTRAT À MOTIFS COMPRENANT DES ZONES HYDROPHILES ET HYDROPHOBES ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.08.2017 Bulletin 2017/33**

(73) Proprietor: **Karlsruher Institut für Technologie
76131 Karlsruhe (DE)**

(72) Inventors:
 • **LEVKIN, Pavel
  76344 Eggenstein-Leopoldshafen (DE)**
 • **FENG, Wenqian
  76344 Eggenstein-Leopoldshafen (DE)**
 • **LI, Linxian
  76344 Eggenstein-Leopoldshafen (DE)**

(74) Representative: **Müller-Boré & Partner
Patentanwälte PartG mbB
Friedenheimer Brücke 21
80639 München (DE)**

(56) References cited:
 EP-A1- 2 684 601    EP-A2- 1 053 784
 EP-A2- 2 952 267    US-A1- 2013 078 711

 • WENQIAN FENG ET AL: "Surface Patterning via Thiol-Yne Click Chemistry: An Extremely Fast and Versatile Approach to Superhydrophilic-Superhydrophobic Micropatterns", ADVANCED MATERIALS INTERFACES, vol. 1, no. 7, 1 October 2014 (2014-10-01) , pages 1400269-n/a, XP055285895, DE ISSN: 2196-7350, DOI: 10.1002/admi.201400269
 • ANDREW B. LOWE: "Thiol-ene "click" reactions and recent applications in polymer and materials synthesis: a first update", POLYMER CHEMISTRY, vol. 5, no. 17, 1 January 2014 (2014-01-01), page 4820, XP055285905, GB ISSN: 1759-9954, DOI: 10.1039/C4PY00339J
 • Dipl.-Chem Alexander Efremov: "Dissertation: Fabrication and application of hydrophilic-hydrophobic micropatterned polymer surfaces", , 13 June 2014 (2014-06-13), XP055286270, Heidelberg Retrieved from the Internet: URL:http://archiv.ub.uni-heidelberg.de/vol ltextserver/17070/1/Dissertation_A Efremov.pdf [retrieved on 2016-07-06]
 • JACKMAN R J ET AL: "FABRICATING LARGE ARRAYS OF MICROWELLS WITH ARBITRARY DIMENSIONS AND FILLING THEM USING DISCONTINUOUS DEWETTING", ANALYTICAL CHEMISTRY, AMERICAN CHEMICAL SOCIETY, vol. 70, no. 11, 1 June 1998 (1998-06-01), pages 2280-2287, XP000766188, ISSN: 0003-2700, DOI: 10.1021/AC971295A

- ERICA UEDA ET AL: "DropletMicroarray: facile formation of arrays of microdroplets and hydrogel micropads for cell screening applications", LAB ON A CHIP, 1 January 2012 (2012-01-01), XP055043855, ISSN: 1473-0197, DOI: 10.1039/c2lc40921f

**Description**

The present invention relates to a patterned substrate having hydrophilic and hydrophobic areas, and a method for producing the same.

Discontinuous dewetting is a powerful method enabling the generation of thousands of microdroplets with a specific geometry, volume and at predefined locations on a patterned substrate. [1-4] During the discontinuous dewetting process, liquid is moved along a surface possessing strong dewettability with a pattern of highly wettable spots to create an array of pinned droplets from picoliter up to microliter volumes. [5] The advantages of this procedure are that it is a single-step method, permits massive parallelization, is compatible with high-throughput screening (HTS) experiments [6, 7] but does not depend on expensive robotics and automation, thereby minimizing experimental costs. These advantages make this method attractive for HTS of cells including single cell screenings, diagnostic or personalized medicine applications.

Recently several biological applications requiring both miniaturization and multiplexing have been realized via discontinuous dewetting. Superhydrophobic-superhydrophilic microarrays were used to create droplet-microarrays for high-throughput screening of living cells [7-10], to create arrays of hydrogel micropads [2] and for single cell screening. [11] Driven by surface tension, cell-laden hydrogels were assembled on a glass surface patterned with hydrophobic and hydrophilic regions. [12]

However, most of the patterns developed thus far only apply to fabricating microdroplet arrays of high surface tension liquids such as water (surface tension $\gamma_{lv}$ = 72.2 mN m$^{-1}$), while the method often fails when most of the organic solvents with lower surface tensions (e.g., ethanol, $\gamma_{lv}$ = 22.1 mN m$^{-1}$ or n-hexane, $\gamma_{lv}$ = 18.4 mN m$^{-1}$) are involved.

There are very few methods compatible with low surface tension liquids. Thus, Whitesides and co-workers utilized a two-phase system consisting of water and an immiscible hydrocarbon fluid to generate microdroplet arrays of hydrocarbons on patterned SAMs. [13] However, their approach is incompatible with water-miscible organic solvents. Droplet-microarrays were also generated using discontinuous dewetting on arrays of microwells produced in poly(dimethylsiloxane) (PDMS). [1] Tuteja et al. fabricated superomniphobic surface by electrospinning solutions of 1H, 1H,2H,2H-heptadecafluorodecyl polyhedral oligomeric silsequioxane (fluoro-decyl POSS) and poly(methyl methacrylate), and patterned this surface with superomniphilic spots by spatial O$_2$ plasma treatment. [3] Lai et al. patterned superamphiphilic areas on a superamphiphobic background via site-selective decomposition of 1H,1H,2H,2H-perfluorodecyltriethoxysilane on TiO$_2$ nanostructure films under UV light. [14] These superomniphobic surfaces have been applied to form microdroplets of organic liquids by discontinuous dewetting. To fabricate superoleophobic surfaces, however, special designs of surface topography such as overhang [15, 16] or pinecone-like structures [14] are needed, and in many cases the surfaces obtain this complex topography at the expense of their laborious preparation, sacrificing mechanical strength and transparency. [17, 18].

Also, EP-A-2 952 267 and US 2013/078711 describe silane and thiol-based surface modification.

The deposition of nanoparticles on solid substrates to form precise two-dimensional arrays represents another challenge in contemporary nanoscience research. [29-31] There is need for a straightforward and simple method for creating two-dimensional patterns of homogeneous nanoparticle layers.

In view of the above, the technical problem underlying the present invention is to provide a patterned substrate which overcomes the shortcomings of the patterned substrates according to the state of the art, in particular to provide a patterned substrate which is mechanically stable and which makes it possible to form microdroplet arrays of fluids having a lower surface tension than water, and a rapid and straightforward method for its production.

The solution to the above technical problem is achieved by providing the embodiments characterized in the claims.

In particular, the present invention relates to a patterned substrate including a flat surface having a patterned coating, the patterned coating comprising

> (i) hydrophilic areas including hydrophilic thioether groups; surrounded by
> (ii) hydrophobic areas including hydrophobic thioether groups separating the hydrophilic areas into a predetermined spatial pattern.

Due to the specific structure of the patterned substrate of the present invention, it is possible to adjust the properties of the hydrophilic and hydrophobic areas (e.g. the desired contact angle for a certain liquid) by appropriately selecting the hydrophilic and hydrophobic thioether groups.

The substrate includes a surface having hydroxyl groups or silanol groups. The substrate comprises glass.

The patterned substrate has a flat surface. Although the form of the substrate is not particularly limited, it preferably has the form of a sheet or a layer. The substrate has a glass surface.

The hydrophilic and hydrophobic thioether groups are covalently bound to the surface of the substrate via a dialkyl silyl linker (Si(alkyl)$_2$). The covalent bond is formed between the silicon atom of the linker and an oxygen atom of the substrate (Si(alkyl)$_2$-O).

The two alkyl groups of the dialkyl silyl linker are independent from each other. A branched or linear C$_1$ to C$_6$ alkyl group is preferred, while the alkyl groups are preferably linear. Particularly preferred is a dimethyl silyl linker.

In another preferred embodiment, the hydrophilic thioether group is functionalized or unfunctionalized alkyl thioyl (alkyl-S-). "Functionalized" means that the alkyl group of the alkyl thioyl may have one or more functional groups, which preferably are selected from the group consisting of amine ($NH_2$), hydroxyl (OH), carboxyl ($CO_2H$), sulfonyl hydroxide (SOsH). It is preferred that the functionalized alkyl has one functional group. Preferably, the alkyl thioyl is a linear $C_1$ to $C_8$ alkyl thioyl, more preferably a linear $C_2$ or $C_3$ alkyl thioyl. Preferably, the functional group of the linear alkyl thioyl is at the terminal position. A particularly preferred functionalized alkyl group is 1-aminoethane-2-yl (cysteaminyl). Further preferred hydrophilic thioether groups include the amino acid cysteine, cysteine-containing hydrophilic proteins, cysteine-containing hydrophilic peptides, thiol-containing sugars, thiol-PEG, or thiol-bearing PVA polymer, and thiol-polysaccharides

In another preferred embodiment, the hydrophilic thioether group is a thioyl functionalized biomolecule, such as biotin-PEG-S-, wherein "PEG" means polyethylene glycol and "S-" indicates the thioyl residue.

In a preferred embodiment, the hydrophobic thioether group is polyfluoroalkyl thioyl. It is preferred that the polyfluoroalkyl group is a branched or linear $C_1$ to $C_{14}$ polyfluoroalkyl group, more preferred is a linear $C_4$ to $C_{12}$ polyfluoroalkyl group. Particularly preferred is *1H,1H,2H,2H*-perfluorodecanethioyl ($F_3C(CF_2)_7(CH_2)_2S$-) (PFDT).

In general, surface properties can be classified into hydrophobic and hydrophilic surfaces depending on the value of the water contact angle (WCA). Herein, a surface having a static WCA of at least 90° is referred as hydrophobic, whereas a static WCA smaller than 90° is referred as hydrophilic. In practice, two types of WCA values are used: static and dynamic. Static water contact angles ($\theta_{stat}$) are obtained by sessile drop measurements, where a drop is deposited on the surface and the value is obtained by a goniometer or a specialized software. Dynamic contact angles are non-equilibrium contact angles and are measured during the growth (advancing WCA $\theta_{adv}$) and shrinkage (receding WCA $\theta_{rec}$) of a water droplet. The difference between $\theta_{adv}$ and $\theta_{rec}$ is defined as contact angle hysteresis (CAH).

In a preferred embodiment of the present invention, the hydrophobic areas have a static WCA of at least 90°, preferably greater than 95°, more preferably greater than 100°, most preferably greater than 110°.

The sliding angle is a measure of the mobility of a drop on the surface. The sliding angle of a surface can be determined by dropping 40 $\mu$L of a specific liquid (such as water, hexane, etc.) on the hydrophilic or hydrophobic area of the substrate and incrementally tilting the substrate in steps of 1°. The angle at which the drop starts to slide is taken as sliding angle.

In a preferred embodiment, the sliding angle of a specific liquid (such as water, an organic liquid such as hexane, etc.) on the hydrophobic surface is at most 15°, preferably at most 10°, most preferably at most 5°. The hydrophobic surface shows dewetting ability to various liquids. Droplets (of water, an organic liquid such as hexane, etc.) do not stick to such surfaces and easily slide off. In a preferred embodiment of the present invention, hydrophilic areas have a static WCA less than 20°, preferably less than 10°, more preferably less than 5°, most preferably close to or of 0°. The hydrophilic surface shows wetting ability to various liquids. Droplets (of water, an organic liquid such as hexane, etc.) are rapidly absorbed by such surfaces.

In a preferred embodiment of the present invention, the patterned substrate is a microarray. In another preferred embodiment of the present invention, the patterned substrate is a microplate having hydrophilic patterns surrounded by the hydrophobic areas. In a more preferred embodiment of the present invention, the patterned substrate is a microplate having 6, 12, 24, 96, 384, 1536 hydrophilic areas.

In a preferred embodiment of the present invention, the hydrophilic areas of the patterned substrate are separated by the hydrophobic areas so as to form an array of hydrophilic areas surrounded by the hydrophobic areas.

In another preferred embodiment of patterned substance according to the present invention, the hydrophilic areas are separated by the hydrophobic areas so as to form hydrophilic channels. In a more preferred embodiment of the present invention, the patterned substance comprises hydrophilic channels on a hydrophobic background and the patterned substrate is used for microfluidic applications.

In another preferred embodiment of the present invention, the hydrophilic areas which are separated by the hydrophobic barriers in the patterned substrate have a circular, pentagram (star) or polygonal (e.g. triangular, square, pentagonal, hexagonal) shape. Hydrophilic areas having a triangular or a square shape allow dense packing of the areas and ease the readout. Nevertheless, the patterned substrate according to the present invention is not limited to any array-format.

In one embodiment of the present invention, the area-density of the hydrophilic areas is increased. Preferably, the amount of hydrophilic areas is at least 200 per $cm^2$ of the patterned substrate, more preferably at least 300 per $cm^2$ of the patterned substrate, even more preferably at least 400 per $cm^2$ of the patterned substrate. In a particularly preferred embodiment of the present invention, the amount of hydrophilic areas is at least 500 per $cm^2$ of the patterned substrate.

According to an even more preferred embodiment of the present invention, the patterned substrate of the present invention has a size which fits on a standard microtiter scaled plate (12 x 8 cm), preferably a size of about $11 \times 7$ cm with at least 40000, preferably at least 50000 hydrophilic areas separated by hydrophobic background.

Preferably, in the patterned substrate according to the present invention, the overall area-number on the substrate is significantly increased. In a particularly preferred embodiment of the present invention, each of the hydrophilic areas has a side length of 1000 μm or less, preferably 500 μm or less, more preferably 400 μm, 300 μm, 200 μm, 100 μm or less, and most preferably 50 μm or less, particularly under the provision that the hydrophilic areas have a stripe, square or triangular shape.

In a preferred embodiment of the present application the hydrophobic barriers have a width of 500 μm or less, preferably 200 μm or less, more preferably 100 μm or less and even more preferably 60 μm or less. A significant advantage of the patterned substrate according to the present invention is that the hydrophobic barriers completely prevent cross-contamination between the areas, despite the reduced width of the barriers.

The development of microdroplet array on a transparent substrate is essential for a range of applications, such as high-throughput screenings using optical detection methods, microscopy or UV-Vis absorption spectroscopy. One of the biggest drawbacks associated with superhydrophobic and superomniphobic coatings is their poor transparency due to light scattering. [28] In contrast, the transmittance of the substrate prior to creating the hydrophilic and hydrophobic areas essentially remains unchanged. Preferably, the transmittance drops by less than 5%, preferably by less than 1%. The drop of the transmittance is calculated as follows:

$$100\% \cdot (T_0 - T_1)/T_0$$

$T_0$: transmittance of the substrate prior to creating the hydrophilic and hydrophobic areas

$T_1$: transmittance of the substrate after having created the hydrophilic and hydrophobic areas

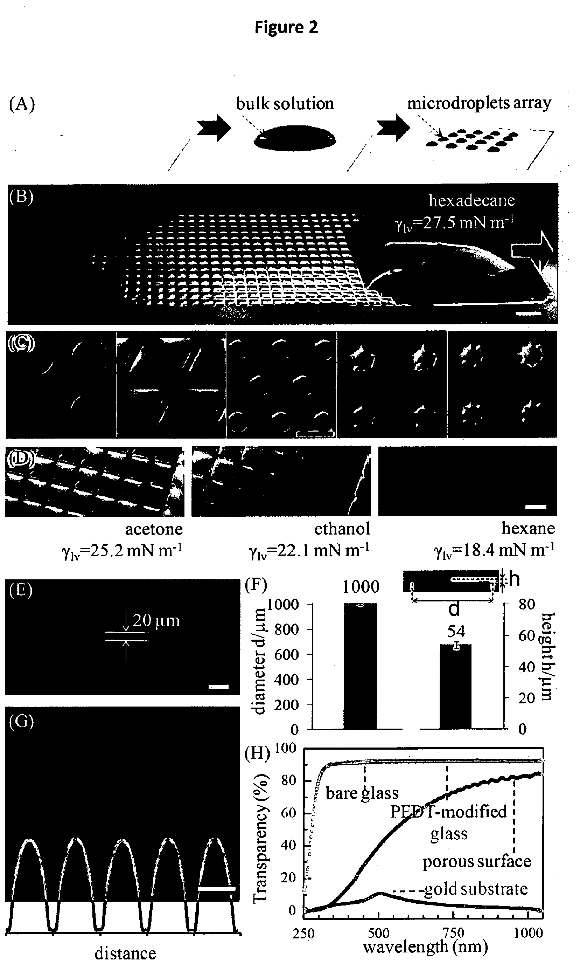

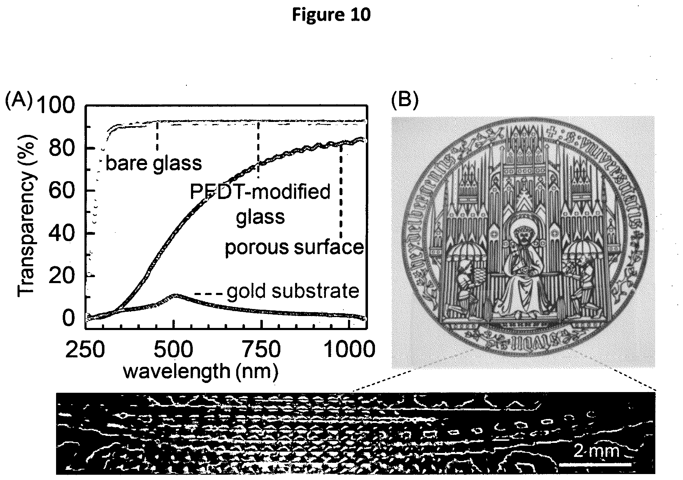

The transmittance of the patterned substrate is at least 90%, preferably at least 95% in the visible light range (300 to 700 nm) (see Fig. 2H and 10). The transmittance is determined for a substrate having a thickness of 1 mm including a patterned coating. The coating is a monolayer, i.e. has a thickness of less than 1 nm.

The patterned substrate according to the present invention can be produced by a method comprising the steps of

(A) providing a substrate including a surface having hydroxyl groups or silanol groups;
(B) contacting the surface having hydroxyl groups or silanol groups with a halo dialkyl alkenyl silane to form dialkyl alkenyl silyl moieties on the surface;
(C) selectively reacting the alkenyl groups of a part of the dialkyl alkenyl silyl moieties with a hydrophobic thiol to hydrophobic thioether groups;
(D) reacting the alkenyl groups of the remainder of the dialkyl alkenyl silyl moieties with a hydrophilic thiol to hydrophilic thioether groups.

Of course, the above explanations in respect of the patterned substrate and the preferred embodiments thereof also apply its production method and its uses. Moreover, the below explanations in respect of the production method, the preferred embodiments thereof and the uses of/methods using the patterned substrate also apply to the patterned substrate, where applicable.

The halo dialkyl alkenyl silane is not particularly restricted and preferably has the chemical formula $QR_2SiX$, where Q represents an alkenyl group, each R independently represents an alkyl group and X is a halogen atom. Preferably, X is Cl, Br or I, more preferably Cl. With respect to the alkyl groups R, the same as already outlined above applies.

The alkenyl group may be linear or branched and is preferably linear. In a preferred embodiment, the alkenyl group is linear and has one terminal C-C double bond. The linear alkyl group having a terminal double bond preferably is a $C_2$ to $C_7$ alkenyl group. Particularly preferred is vinyl.

In a preferred embodiment, step (B) is carried out by immersing the substrate in a solution containing the halo dialkyl alkenyl silane. The content of the silane in the solution preferably is 0.01 to 1 vol%, more preferably 0.2 to 0.6, e.g. 0.4 vol%. The contacting time is not particularly limited and preferably is 30 seconds to 10 minutes, more preferably 1 to 3 minutes. The solvent preferably is selected from the group consisting of dichloromethane, toluene, tetrahydrofuran and mixtures thereof. It is further preferred that the solution also contains a base, such as an amine, for instance a primary, preferably a secondary or a tertiary amine (e.g. a trialkylamine such as triethylamine), an inorganic base, an aromatic base (e.g. pyridine) or mixtures thereof (preferably the base is contained in a total of 0.5 to 3 vol%, more preferably 1.0 to 2.2 vol%, e.g. 1.6 vol%). Moreover, particularly in case the halogen of the silane is Cl, a catalyst such as 4-(dimethylamino)pyridine (preferably 0.1 to 5 mg/mL) may be contained in the solution.

The reaction temperature during step (B) is not particularly limited and is preferably 10 to 40°C, more preferably 15 to 30°C, for instance room temperature (20°C). When the reaction temperate is in the above range, no (excessive) temperature control by heating or cooling is necessary.

In step (C), the alkene moiety of a part of the silyl groups bound to the surface is subjected to hydrothiolation involving the hydrophobic thiol. Accordingly, in step (D), the alkyl moiety of the remainder of the silyl groups is subjected to hydrothiolation involving the hydrophilic thiol. Thus, respective (i) hydrophilic and (ii) hydrophobic areas are formed so that desired hydrophilic/hydrophobic properties of the areas (i) and (ii) can be adjusted by appropriately selecting the respective thiols.

In step (C), the alkenyl groups of a part of the dialkyl alkenyl silyl moieties are site-selectively reacted with a hydrophobic thiol to hydrophobic thioether groups. That is, only the dialkyl alkenyl silyl moieties, bound to surface regions where the hydrophobic areas (ii) are to be formed, are reacted. It is preferred that site-selectivity is achieved by means of a photomask.

According to a preferred embodiment of the present invention, step (C) comprises the steps of

    (C1) applying the hydrophobic thiol to the surface having dialkyl alkenyl silyl moieties;
    (C2) covering the surface with the hydrophobic thiol with a photomask;
    (C3) irradiating the surface with the hydrophobic thiol and the photomask with UV light; and
    (C4) removing the photomask.

In step (C1), the pure hydrophobic thiol as well as a solution thereof may be applied to the surface. It is preferred to use a solution of the thiol, wherein the content of the thiol preferably is 1 to 50 vol%, more preferably 5 to 30 vol%. Suitable solvents are organic solvents such as acetone, ethanol, ethyl acetate and mixtures thereof.

A suitable photomask for step (C2) has a low UV-transmittance, and is for example a quartz chromium photomask.

UV irradiation (step (C3)) is preferably carried out for a duration of 10 seconds to 5 minutes, more preferably 30 seconds to 3 minutes, at 0.5 to 20 mW cm$^{-2}$, more preferably 1 to 10 mW cm$^{-2}$, at a wavelength of 200 to 360 nm, for instance 260 nm.

According to a preferred embodiment of the present invention, step (D) comprises the steps of

    (D1) applying the hydrophilic thiol to the surface having the remainder of the dialkyl alkenyl silyl moieties; and
    (D2) irradiating the surface with the hydrophilic thiol with UV light.

In step (D1), the pure hydrophilic thiol as well as a solution thereof may be applied to the surface. It is preferred to use a solution of the thiol, wherein the content of the thiol preferably is 5 to 50 vol%, more preferably 10 to 30 vol%. Suitable solvents are water and ethanol and mixtures thereof.

In respect of the preferred irradiation conditions for step (D2), the same as outlined above in respect of step (C3) applies. Further, it is preferred to cover the surface with the hydrophilic thiol with a quartz slide after step (D1) and before step (D2).

The present invention further relates to a method for forming an array of separated homogenous non-aqueous fluid microdroplets of a desired shape and size in a desired spatial pattern, comprising the steps of:

    (a) providing a patterned substrate according to the present invention;

        wherein the hydrophilic areas have the desired shape and size and
        the hydrophobic areas separate the hydrophilic areas into the desired spatial pattern; and

    (b) applying the non-aqueous fluid to a multitude of the hydrophilic areas at the same time.

Due to its specific surface properties, the patterned substrate is suitable for forming high-density arrays of microdroplets of non-aqueous fluids with low surface tension by discontinuous dewetting.

In a preferred embodiment, the non-aqueous fluid has a surface tension which is lower than the surface tension of water. More preferably, the surface tension of the non-aqueous fluid is at least 18.4 and less than 72.2 mN m$^{-1}$. In a preferred embodiment, the non-aqueous fluid is an organic solvent. Suitable organic solvents are listed in the following Table 1:

Table 1. Surface tension of different liquids at 20°C (retrieved from http://www.surface-tension.de/).

| Liquid | σ [mN m$^{-1}$] |
| --- | --- |
| Ethylene glycol | 47.7 |
| *N,N*-Dimethylformamide | 37.1 |
| Cyclohexanol | 34.4 |
| Olive oil | 32.0 |
| n-Hexadecane | 27.5 |
| Dichloromethane | 26.5 |
| Acetone | 25.2 |
| 1-butanol | 24.5 |
| Ethyl acetate | 23.6 |
| Ethanol | 22.1 |
| n-Hexane | 18.4 |

Further non-aqueous fluids which are suited for the above method are toluene, methanol, tetrahydrofuran, and polymerizable organic monomer compositions including ethylene dimethacrylate and (meth)acrylic acid.

In a preferred embodiment, the hydrophilic areas have at least one compound absorbed thereto which can diffuse into the non-aqueous fluid microdroplets formed. The at least one compound may be selected from the group consisting of chemical compounds, pharmaceutically active agents, biologically active agents, toxins, crosslinkers, polymers and mixtures thereof. Methods for adsorbing any of said compounds to the hydrophilic areas are not particularly limited and include for example the formation of microdroplets of a non-aqueous fluid containing said compounds and subsequent drying of the microdroplets.

In a preferred embodiment, the method for forming an array of separated homogenous non-aqueous fluid microdroplets of a desired shape and size in a desired spatial pattern further comprises the step of

(c) collecting analytical data from one or more of the microdroplets.

Step (c) is not particularly limited, i.e. analytical data may be collected in any conceivable way and is preferably carried out by reverse microscope, UV/Vis-spectrometry, Circular Dichroism spectrometer. By including step (c), it is possible to use the patterned substrate according to the present invention for chemical screening.

Disclosed is the use of the patterned substrate for forming a pattern of polymer micropads on a substrate, comprising the steps of

providing a patterned substrate according to the present invention;
applying a polymerizable monomer composition to the patterned surface of the patterned substrate for forming an array of separated homogenous microdroplets; and polymerizing the monomer composition on the patterned surface.

The polymerizable monomer is not particularly restricted and comprises (meth)acrylate monomers such as ethylene dimethacrylate and (meth)acrylic acid. Preferably, the polymerizable monomer composition consist of the polymerizable monomer and, optionally, a polymerization starter. Polymerizing can be carried out by various methods, including UV-irradiation and heating.

Due to the specific surface properties of the patterned substrate according to the present invention, the polymerizable monomer composition aggregates in the hydrophilic areas of the substrate.

Preferably, the polymer micropads are polymer microlenses. Microlense arrays can be used for optical applications.

Further disclosed is the use of the patterned substrate for forming a patterned coating of nanoparticles on a substrate, comprising the steps of

providing a patterned substrate according to the present invention;
applying a suspension including a solvent and nanoparticles to the patterned surface of the patterned substrate for forming an array of separated homogenous microdroplets; and
evaporating the solvent.

Using the patterned substrate according to the present invention, it is possible to form a precise two-dimensional arrays of nanoparticles on solid substrates. A suspension including a (preferably organic) solvent and nanoparticles is applied on the patterned surface of the patterned substrate, followed by evaporating the solvent. Preferred organic solvents are hexane, ethanol, toluene, ethyl acetate.

The nanoparticles preferably have an arithmetic average particle diameter as determined by scanning electron microscopy or transmission electron microscopy of at most 1000 nm.

## Examples

Materials and Methods

2-Hydroxyethyl methacrylate (HEMA) and ethylene dimethacrylate (EDMA) were purified using a short column filled with basic aluminum oxide to get rid of the inhibitors. Gold nanoparticles (250 nm) in PBS solution were purchased from Alfa Aesar (Germany). The gold nanoparticles were collected by centrifugation and resuspended into ethanol. Oleic acid coated iron oxide nanoparticles were synthesized according to the literature [33] All other chemicals were purchased from Sigma-Aldrich (Germany) and used without further purification. Schott (Germany) Nexterion Glass B UV transparent glass plates were used in this work.

Characterization

Ellipsometric data were acquired using a SENpro ellipsometer (SENTECH Instruments, Germany) in the rotating analyzer mode in the spectral range of 370-1050 nm. SEM images were obtained using the LEO 1530 Gemini scanning electron microscope (Zeiss, Germany) at the Institute of Nanotechnology (INT), KIT. Prior to SEM measurements, samples were sputtered with a 10 nm gold layer using a Cressington 108 auto sputter coater (INT, KIT). The distribution of cysteamine and PFDT fragments on the surface was confirmed by ToF-SIMS (ION TOF Inc., Münster, Germany), IFG, KIT. The Brightfield images were taken using a Leica DFC360 microscope (Germany). The fluorescence images were captured by a Keyence BZ-9000 fluorescent microscope (Japan). A UK 1115 digital camera from EHD imaging (Germany) was used to take images of water and hexadecane droplets on the surface under ambient conditions. ImageJ software with a Dropsnake plugin was used to measure the contact angle. UV-Vis spectroscopy was performed with a HR2000+ high resolution spectrometer (Ocean Optics Inc., USA) equipped with DH-2000-BAL light source (Mikropack GmbH, Germany).

Preparation of dewetting-wetting pattern on bare glass

Two bare glass plates were immersed into 49 mL of dichloromethane containing triethylamine (TEA) (0.8 mL), chloro(dimethyl)vinylsilane (0.2 mL) and 4-(dimethylamino) pyridine (DMAP) (50 mg, 0.46 mmol) serving as a catalyst. Then, the solution was stirred at RT for 2 min. The plates were washed with ethanol and dried.

Chloro(dimethyl)vinylsilane modified glass plates were then wetted with ethyl acetate solution of 20 vol% of 1H,1H,2H,2H-perfluorodecanethiol, covered by a quartz chromium photomask, and irradiated by 5.0 mW·cm$^{-2}$ 260 nm UV light for 60 s. After removing the photomask, the glass was washed with acetone and dried.

The resulting glass was wetted again with ethanol-water (1:1) solution containing 10 wt% of cysteamine hydrochloride, covered by a quartz slide, and irradiated by UV light for 60 s. The plate was washed extensively with ethanol and dried.

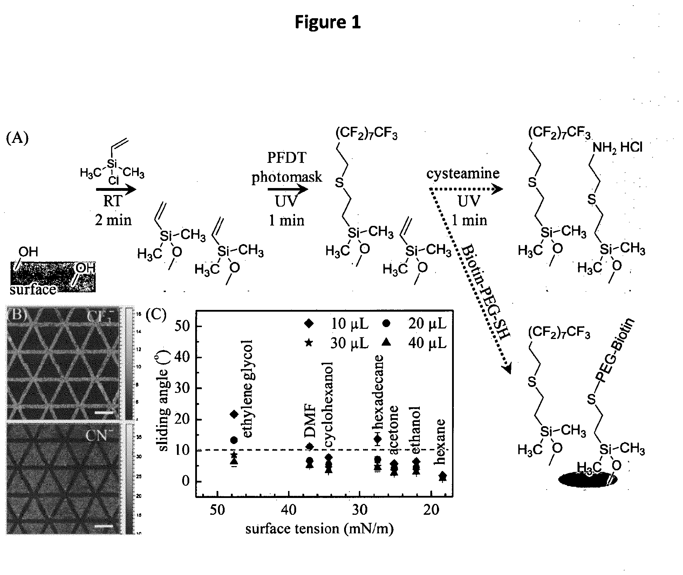

The general surface modification and patterning procedure is shown in Fig. 1A. A microscope glass slide was immersed in a dichloromethane solution containing triethylamine (1.6 vol%), 4-(dimethylamino)pyridine (1 mg/mL) as well as chloro(dimethyl)vinylsilane (0.4 vol%) for 2 min under room temperature. The silanization reaction endowed the glass substrate with a thiol-reactive monolayer of vinyl groups [19].

(In an additional experiment, the thickness of the dimethyl vinyl silyl coating coated in a similar manner on a silicon wafer as determined by ellipsometry was 0.97±0.08 nm.)

In the second step, a pattern of fluorinated areas was prepared by site-selective immobilization of *1H, 1H,2H,2H*-perfluorodecanethiol (PFDT) on the vinyl-modified glass surface under UV irradiation (1 min, 260 nm, 5 mW/cm$^2$) through a chromium quartz photomask. The remaining surface vinyl groups were then further modified by cysteamine hydrochloride using the thiol-ene reaction. The well-delineated chemical pattern with sharp edges was confirmed via time-of-flight secondary ion mass spectrometry (ToF-SIMS) (Fig. 1B and 6). Surface modification was also confirmed by measuring water and hexadecane static contact angles ($\theta_{st}$) (Fig. 7). Thus, PFDT- and cysteamine-modified surfaces possessed 38° and 5° hexadecane $\theta_{st}$, respectively. In addition to the functionalization of vinyl-modified surfaces by cysteamine, we also confirmed site-selective immobilization of thiol-containing biomolecules, such as biotin-PEG-SH (Fig. 8).

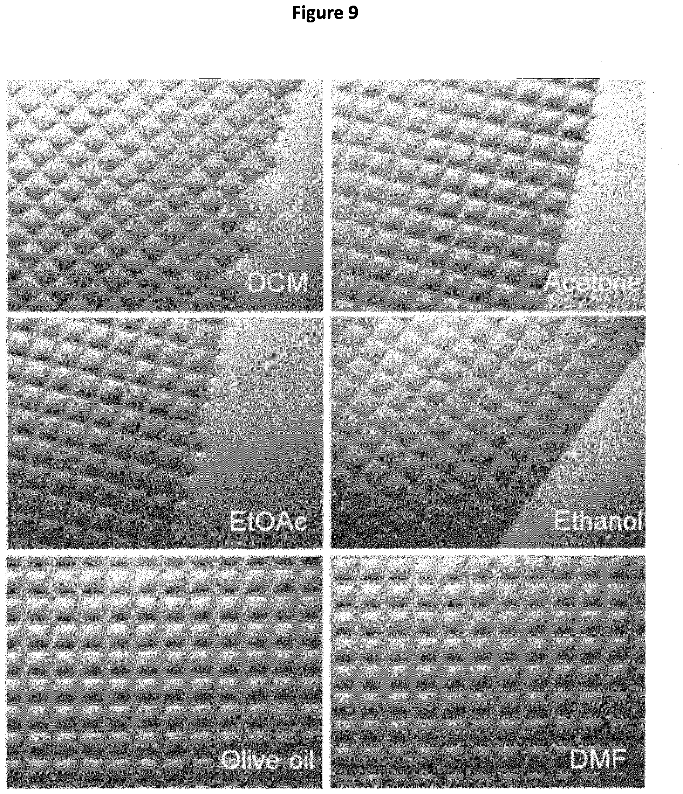

We utilized this surface modification strategy to create wettable cysteamine micropatterns surrounded by non-wettable PFDT areas, and studied the effect of discontinuous dewetting. The approach to fabricate microdroplet arrays is schematically presented in Fig. 2A. When liquid is moved along a PFDT-cysteamine patterned glass surface, the solvent discontinuously dewets at the PFDT barriers and spontaneously forms a high-density array of separated droplets, each located on cysteamine-modified areas (Fig. 2B). Microdroplets with complex geometries such as squares, triangles, stars (Fig. 2C) or even lines of 20 μm-wide channel-like droplets (Fig. 2E), could be formed. Apart from hexadecane, many other low surface tension organic liquids, such as olive oil (32 mN m$^{-1}$), dimethylformamide (37.1 mN m$^{-1}$), dichloromethane (26.5 mN m$^{-1}$), ethyl acetate (23.6 mN m$^{-1}$), acetone (25.2 mN m$^{-1}$), ethanol (22.1 mN m$^{-1}$), and n-hexane (18.4 mN m$^{-1}$), were used to form corresponding microdroplet arrays (Fig. 2D and 9). Finally, the diameter and height of hexadecane droplets formed on cysteamine circles of 1000 μm diameter measured 1000±7 μm and 54±2 μm, respectively (Fig. 2F), illustrating good uniformity of the droplets produced via discontinuous dewetting method.

Preparation of superhydrophobic porous surface and superhydrophobic-superhydrophilic micropatterns

We employed a recently published procedure [35] to make superhydrophobic surface and superhydrophobic-superhydrophilic micropatterns on nanoporous HEMA-EDMA polymer layers.

Comparison of mechanical stability of patterned substrate according to the present invention with porous solid surface

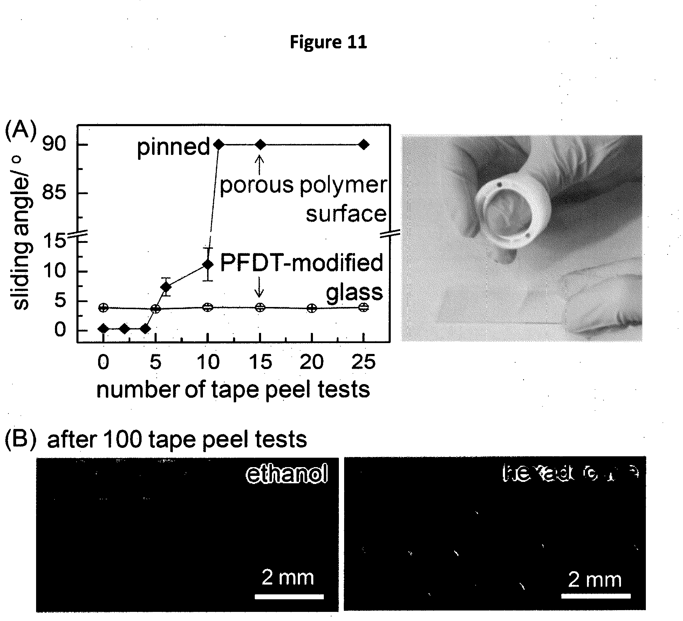

Another challenge all common superwettable surfaces share is their low mechanical stability resulting from their porous or hierarchical surface topography. The advantage of the non-porous solid surfaces according to the present invention is that they are mechanically more stable. Here we show the PFDT-modified glass retained its dewetting behavior after subjection to different mechanical treatments, such as scrubbing with a tissue paper, pressing or performing multiple adhesive tape peel tests. Thus, the sliding angle of PFDT-modified glass did not significantly increase even after 25 tape peel tests, while the patterned glass could still be used to create microdroplets arrays even after 100 tape peel tests (Fig. 11). In contrast, a superhydrophobic fluorinated porous poly(2-hydroxyethyl methacryate-co-ethylene dimethacrylate) lost its superhydrophobicity after 10 tape peel tests (Fig. 11(A)).

Preparation of poly(ethylene dimethacrylate) micropad array

First, 30 μL of a mixture of ethylene dimethacrylate (EDMA) and 2,2-dimethoxy-2-phenylacetophenone (photoinitiator, 1 wt. %) was drained off a pre-patterned PFDT-cysteamine glass plate to form an array of monomer microdroplets. Then the glass substrate was placed into a flask filled with N$_2$ and irradiated with UV (312 nm, 2.0 mW·cm$^{-2}$) for 30 min and washed with acetone.

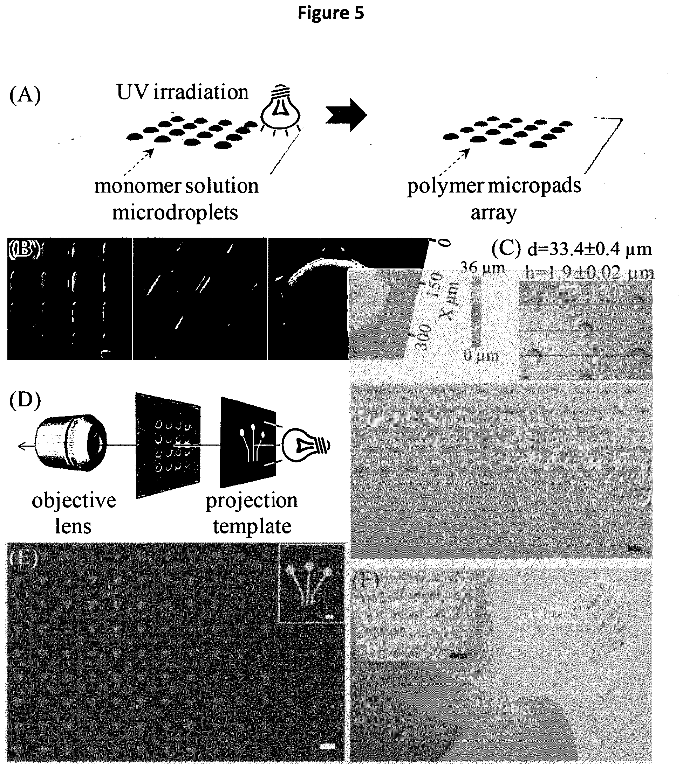

As explained above and displayed in Fig. 5A, an array of ethylene dimethacrylate microdroplets with the desired geometries was formed on a pre-patterned glass, followed by photopolymerization under N$_2$ atmosphere to form an array of PMPs (polymer micropads), creating poly(ethylene dimethacrylate) micropads with features down to 30 μm (volume 0.84 pL) and circular, square, triangular or more complex shapes (Fig. 5B,C). Due to their arched shape and transparency, such arrays of transparent polymer micropads of defined shapes behave as arrays of microlenses (Fig. 5D,E).

## Preparation of flexible and smooth HEMA-EDMA polymer layer

A piece of cellulose membrane (Whatman regenerated cellulose membrane filter, pore size 0.2 $\mu$m) was placed on a Teflon film (American Durafilm Co.) substrate and wetted by polymerization mixture of HEMA (89 wt%), EDMA (10 wt%) and 2,2-dimethoxy-2-phenylacetophenone (photoinitiator, 1 wt%). Then this cellulose membrane was covered by another Teflon film and irradiated for 15 min with 5.0 mW·cm$^{-2}$ 260 nm UV light. After removing the Teflon films, the resulting polymer layer was washed extensively with ethanol.

In order to create a PFDT-cysteamine pattern, the HEMA-EDMA polymer layer was functionalized and patterned by the same manner as described for the functionalization of glass plates (see also Figure 1A).

As can be taken from Fig. 5F, the chemical modification approach according to the present invention can be applied to create wetting-dewetting micropatterns and corresponding organic droplet microarrays on flexible polymeric substrates bearing surface hydroxyl groups such as smooth poly(2-hydroxyethyl methacrylate-co-ethylene dimethacrylate) (HEMA-EDMA) membrane.

## Measurement of sliding angles

To characterize the PFDT-surface for its resistance to liquid droplet mobility, so important for achieving discontinuous dewetting, sliding angles with 10, 20, 30 and 40 $\mu$L droplets of liquids possessing different surface tension (see Table 1) were measured (Fig. 1C). All liquids with surface tensions between 47.7 and 18.4 mN m$^{-1}$ displayed sliding angles less than 10° for droplets above 30 $\mu$L revealing the PFDT-modified glass's remarkable dynamic dewettability. The sliding angles of organic liquids increased upon lowering the droplet volumes from 40 to 10 $\mu$L, which can be attributed to the static friction between the droplet and substrate.[20] The cysteamine modified surface, on the other hand, displayed ideal wettability by all organic solvents tested with a receding contact angle approaching 0°.

## Sandwiching approach

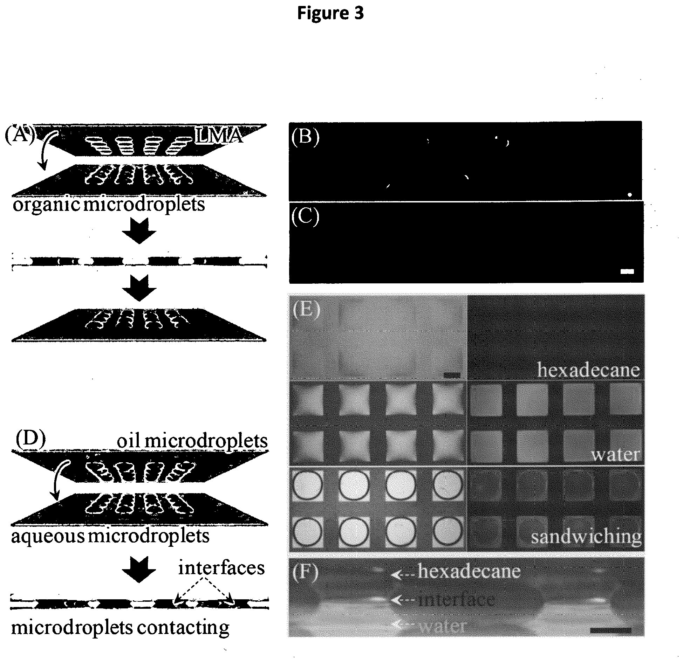

The main potential of microarray platforms consists in the possibility of high-throughput screening (HTS) applications. However, it is usually difficult to add libraries of different chemicals simultaneously into individual liquid microreservoirs. Here we employed the "sandwiching" approach [7] to enable the parallel single-step addition of different chemicals into individual organic solvent microdroplets formed via the discontinuous dewetting approach. A schematic representation of the organic droplet-array sandwich platform is shown in Fig. 3A. A library-microarray (LMA) slide (Fig. 3B) was prepared by printing two different dyes onto a fluorinated glass slide. In the second step, an array of 1-butanol microdroplets

(1000 $\mu$m square pattern) was sandwiched with the LMA slide leading to the dissolution of the chemicals in the individual microdroplets without cross-contamination between adjacent droplets (Fig. 3C). This method sets the stage for performing miniaturized and parallel high-throughput chemical reactions in organic solvents without multiple pipetting steps. In addition, water-oil interfaces in microdroplets can be formed by sandwiching an oil microdroplet array with an aqueous microdroplet array formed on a superhydrophobic-superhydrophilic pattern (Fig. 3D-F), thereby enabling miniaturized parallel liquid-liquid microextractions or heterophasic organic reactions.

## Preparation of two-dimensional pattern of homogeneous nanoparticle layers

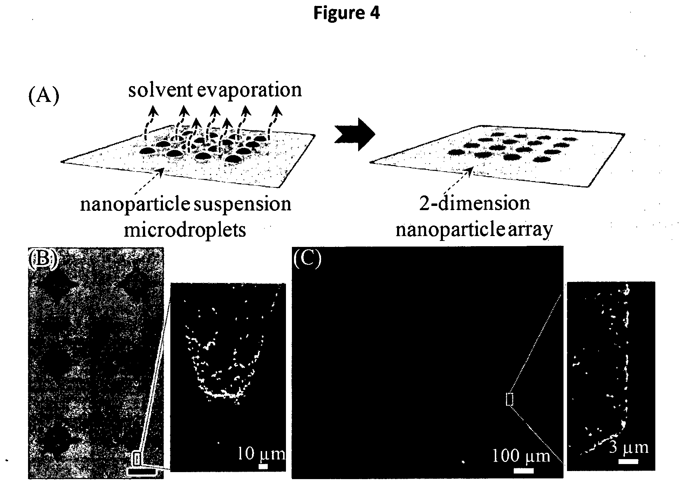

As can be taken from Fig. 4A, microdroplet arrays can be applied to create two-dimensional patterns of homogeneous nanoparticle layers. Fig. 4B illustrates a pattern of gold nanoparticles (Au NPs) prepared by sliding an ethanol suspension of 200 nm Au NPs along a pre-patterned glass surface. Another array of oleic acid-coated iron oxide nanoparticles fabricated using the same procedure is shown in Fig. 4C. The iron oxide nanoparticles were suspended in n-hexane and self-assembled into hexagon-shape homogeneous patterns. Interestingly, there is almost no "coffee ring" effect in this case, most probably because the evaporation of hexane happens much faster than the liquid flow generated by the uneven evaporation at the edge of the droplets as in the case of slow evaporation of aqueous solutions. [32]

## Description of the drawings

**Figure 1.** (A) Schematic representation of the silanization reaction and UV-induced thiol-ene photoclick reactions for creating the wetting-dewetting micropatterns. (B) ToF-SIMS 2D graphs of negative CF3- and the CN- secondary ions, showing the patterning of PFDT and cysteamine, respectively. Scale bar: 500 $\mu$m. (C) Sliding angles of low surface tension solvents on PFDT-modified glass (see Table 1 for more details).

**Figure 2.** (A) Schematic representation of the fabrication of a microdroplet array of low surface tension liquid via discontinuous dewetting. (B) Formation of an array of hexadecane microdroplets on a PFDT-cysteamine patterned glass slide. (C) Brightfield microscopy images of hexadecane microdroplets of different geometries. (D) Brightfield microscopy images of acetone, ethanol and hexane microdroplet arrays. (E) Fluorescence microscopy image of an array of microchannels formed by rolling an acetone solution of fluorescein along a glass slide patterned

with 20-$\mu$m cysteamine-modified stripes. (F) Quantification of diameters and heights of hexadecane droplets formed on a 1 mm circular pattern. (G) Fluorescence microscopy image of ethanol droplets containing a fluorescein dye. A graph showing the fluorescence intensity profile along the row of droplets (inset). (H) UV-NIR transmittance spectra of bare glass, PFDT-modified glass, glass coated with a porous polymethacrylate layer,[10] and gold coated glass (100 nm Au/5 nm Ti evaporated on glass slide). The transparency of the PFDT-modified glass is comparable with that of bare glass slide and above 90% in the visible range. Scale bars: B, 2 mm; C, 200 $\mu$m; D and G, 500 $\mu$m; E, 50 $\mu$m.

**Figure 3.** (A) Schematic representation of simultaneous addition of chemicals from a library-microarray (LMA) slide into each individual organic microdroplet by using a droplet-array sandwiching technology. (B) Fluorescence microscopy image of a LMA slide. Rhodamine 6G and FITC were printed onto a PFDT-modified glass by using a noncontact ultralow volume dispenser. (C) Fluorescence microscopy images of an array after transferring the dyes from LMA into the individual 1-butanol microdroplets using the sandwiching method. (D) Schematic representation of generation of the interfaces between oil and aqueous microdroplets by using droplet-array sandwiching technology. (E) Brightfield and fluorescence microscopy images of hexadecane droplets (top), Rhodamine B dyed water droplets (middle) and the droplets after sandwiching (bottom). A superhydrophobic-superhydrophilic polymer surface [10] was used for fabricating water droplets. (F) Side view of the interfaces between hexadecane and water microdroplets. Scale bars: 500 $\mu$m.

**Figure 4.** (A) Schematic representation of the fabrication of 2-dimensional nanoparticle arrays using the method of discontinuous dewetting. (B) Brightfield microscopy image of an array of Au nanoparticles formed using their ethanol dispersion. Scale bar: 500 $\mu$m. SEM image shows the formation of coffee ring structures at the corners. (C) SEM images of an array of oleic acid coated iron oxide nanoparticles formed by the discontinuous dewetting of their hexane dispersion. High-magnification image shows the absence of the coffee ring effect due to the fast evaporation of hexane droplets.

**Figure 5.** (A) Schematic representation of the formation of 2.5D polymer micropad arrays. Liquid ethylene dimethacrylate monomer is first self-assembled into microdroplets with desired geometry on a pre-patterned glass slide, and then polymerized under UV light. (B) Brightfield images of poly(ethylene dimethacrylate) micropads with square (left) and triangle (middle) geometries, and a 3D-profilometry image of a star-shaped micropad (right). (C) SEM image of poly(ethylene dimethacrylate) micropads as small as 33 $\mu$m in diameter. Diameter and heights of five polymer micropads are measured by optical profilometry. (D) Experimental setup of the projection experiment. (E) Optical micrograph of images projected through an array of microlenses. Original image is in the inset. (F) Photograph of a flexible HEMA-EDMA polymer layer with a hexadecane microdroplet array. A brightfield microscopy image of the hexadecane array on the polymer film is inserted. Scale bars: B and F, 500 $\mu$m; C, 50 $\mu$m; E, 300 $\mu$m.

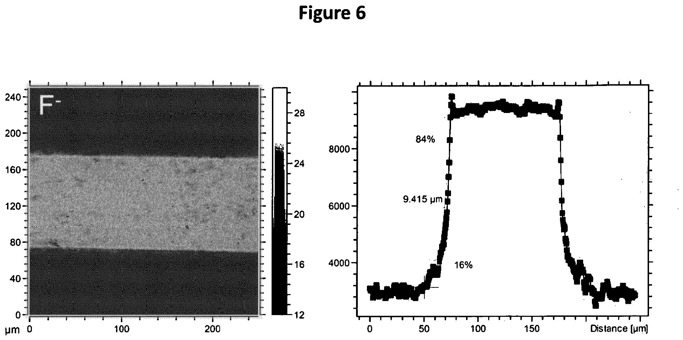

**Figure 6.** High resolution ToF-SIMS image of a patterned substrate (F$^-$ions), showing a sharp edge of the PFDT-modified pattern.

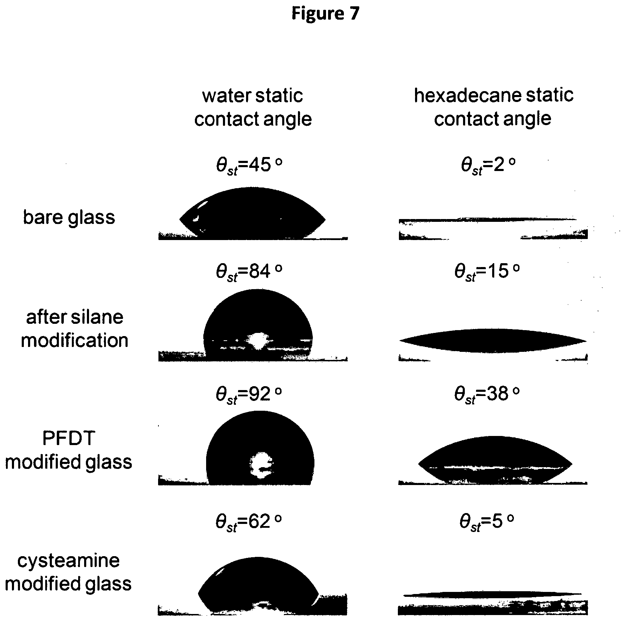

**Figure 7.** Water (left column) and n-hexadecane (right column) static contact angles on various surfaces.

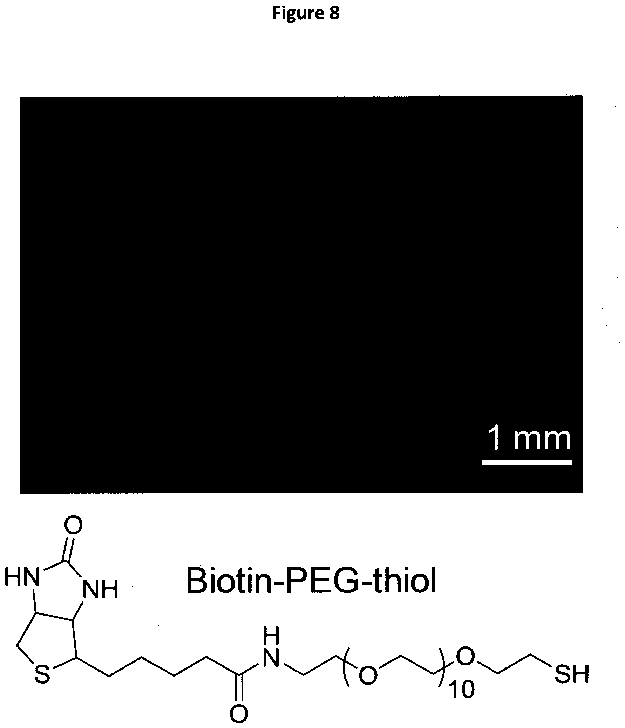

**Figure 8.** A vinyl-modified glass was site-selectively modified by *1H,1H,2H,2H*-perfluorodecanethiol. Then a microdroplets array of acetone solution containing biotin-PEG-thiol (100 mg/mL) was generated on the pre-patterned glass and irradiated under UV light, followed by washing. The pattern was visualized by incubating the substrate with a solution of Alexa Fluor 594-labeled streptavidin.

**Figure 9.** Brightfield microscopy images of dichloromethane (DCM), acetone, ethyl acetate (EtOAc), ethanol, olive oil and N,N-dimethylformamide (DMF) microdroplet arrays prepared by discontinuous dewetting method on a prepatterned glass. The side length of the square spots is 500 $\mu$m.

**Figure 10.** (A) Transmittance spectra of bare glass, PFDT-modified glass, porous polymer layer coated glass [35] and gold coated glass. [36] Compared with bare glass, the transparency of a PFDT-modified glass is unchanged and above 90% in the visible light range. (B) Photograph showing the relative transparency of a hexadecane microdroplets array on a patterned glass. The resulting hexadecane microdroplets array is highly transparent and the background photo is clearly visible through the sample.

**Figure 11.** (A) Sliding angles of 20 $\mu$L ethanol droplets on a PFDT-modified glass (blue ○) as well as 8 $\mu$L water droplet on a superhydrophobic porous polymer layer [35] (red ♦) after tape peel test (sticking and removing the adhesive "Scotch tape") for different times. After 10 times of tape peel tests, the porous polymer layer lost its superhydrophobicity, indicating the polymer was removed layer by layer.

However, the sliding angle of PFDT-modified glass remains unchanged during 25 times of the tape peel tests, showing good mechanical durability. A photograph showing the tape peel test is inserted. (B) The brightfield image of ethanol and hexadecane microdroplet arrays on a pre-patterned glass. This prepatterned glass can be used as a template for generating liquid microdroplets array even after the tape peel tests for 100 times.

The present invention provides a rapid and convenient surface functionalization method allowing to create mechanically highly stable transparent micropatterns of both highly wettable and non-wettable slippery areas on substrates such as glass sheets. These patterns can be used to realize a single-step approach for the fabrication of arrays of low surface tension liquid microdroplets via the discontinuous-dewetting method. A wide range of low surface tension liquids including ethanol, methanol, acetone, dichloromethane, toluene and even hexane can be used to produce arrays of separated microdroplets with square, circular, hexagon or more complex shapes. Such single step formation of thousands of organic microdroplets in precise locations in an array format and with the same volumes provides a unique solution for ultra high-throughput chemical screening applications. The possibility of the parallel addition of different chemicals into the individual organic microdroplets can be realized by applying the sandwiching method. This method can also be employed to form arrays of low surface tension liquid methacrylate monomers, followed by their polymerization to create high-density arrays of polymer microlenses with specific shapes and positions of each lens. This approach is also uniquely suited to create patterns of hydrophobic nanoparticles that can be only dispersed in organic solvents. Two-dimensional (2D) patterns of various nanoparticles, including both gold and magnetic iron oxide nanoparticles, can be produced by using the patterned substrate according to the present invention.

The present invention provides a straightforward approach for surface patterning that enables the fabrication of high-density arrays of microdroplets by discontinuous dewetting which is particularly compatible with organic liquids with low surface tension (preferably a surface tension less than that of water). According to a particularly preferred embodiment, the method is based on the chemical modification of a chloro(dimethyl)vinylsilane-coated flat glass surface with *1H,1H,2H,2H*-perfluorodecanethiol (PFDT) via the UV-induced thiol-ene click reaction. Since the method does not necessarily involve superoleophobic or superhydrophobic surfaces, it eliminates the problems of low transparency and complex fabrication, and makes substrates with excellent mechanical stability possible. Thanks to the feasibility of using organic solvents to prepare high-density droplet microarrays, this approach enables the formation of homogeneous arrays of hydrophobic nanoparticles, polymer micropads of controlled shapes, as well as polymer microlens arrays. Organic microdroplet arrays prepared on flexible polymeric substrates have been also realized.
In conclusion, the present invention provides a rapid and convenient surface functionalization method to create transparent micropatterns of both highly wettable and non-wettable slippery areas e.g. on smooth glass. These patterns can be used to realize a single-step approach for the fabrication of arrays of low surface tension liquid microdroplets via the discontinuous-dewetting method. A wide range of low surface tension liquids including ethanol, methanol, acetone, dichloromethane, toluene and even hexane can be used to produce arrays of separated microdroplets with square, circular, hexagon or more complex shapes. Such single step formation of thousands of organic microdroplets in precise locations in an array format and with the same volumes provides a unique solution for ultra high-throughput chemical screening applications. The possibility of the parallel addition of different chemicals into the individual organic microdroplets was realized by applying the sandwiching method. The present invention can be employed also to form arrays of low surface tension liquid methacrylate monomers, followed by their polymerization to create high-density arrays of polymer microlenses with specific shapes and positions of each lens. This approach is also uniquely suited to create patterns of hydrophobic nanoparticles that can be only dispersed in organic solvents. To provide examples, 2D patterns of both gold and magnetic iron oxide nanoparticles were provided.

## Reference list

[1] R. J. Jackman, D. C. Duffy, E. Ostuni, N. D. Willmore, G. M. Whitesides, Anal. Chem. 1998, 70, 2280.

[2] E. Ueda, F. L. Geyer, V. Nedashkivska, P. A. Levkin, Lab Chip 2012, 12, 5218.

[3] S. P. R. Kobaku, A. K. Kota, D. H. Lee, J. M. Mabry, A. Tuteja, Angew. Chem. Int. Ed. 2012, 51, 10109.

[4] S. P. R. Kobaku, G. Kwon, A. K. Kota, R. G. Karunakaran, P. Wong, D. H. Lee, A. Tuteja, ACS Appl. Mater. Interfaces 2015, 7, 4075.

[5] Y. Xia, D. Qin, Y. Yin, Curr. Opin. Colloid Interface Sci. 2001, 6, 54.

[6] S.-W. Hu, B.-Y. Xu, W.-k. Ye, X.-H. Xia, H.-Y. Chen, J.-J. Xu, ACS Appl. Mater. Interfaces 2015, 7, 935.

[7] A. A. Popova, S. M. Schillo, K. Demir, E. Ueda, A. Nesterov-Mueller, P. A. Levkin, Adv. Mat. 2015, 27, 5217.

[8] W. Feng, L. Li, C. Yang, A. Welle, O. Trapp, P. A. Levkin, , Angew. Chem. Int. Ed.2015, 54, 8732.

[9] F. L. Geyer, E. Ueda, U. Liebel, N. Grau, P. A. Levkin, , Angew. Chem. Int. Ed. 2011, 50, 8424.

[10] W. Feng, L. Li, E. Ueda, J. Li, S. Heißler, A. Welle, O. Trapp, P. A. Levkin, Adv. Mater. Inter. 2014, 1, 1400269.

[11] H. Li, Q. Yang, G. Li, M. Li, S. Wang, Y. Song, ACS Appl. Mater. Interfaces 2015, 7, 9060.

[12] Y. Du, M. Ghodousi, E. Lo, M. K. Vidula, O. Emiroglu, A. Khademhosseini, Biotechnol. Bioeng. 2010, 105, 655.

[13] H. A. Biebuyck, G. M. Whitesides, Langmuir 1994, 10, 2790.

[14] Y.-K. Lai, Y.-X. Tang, J.-Y. Huang, F. Pan, Z. Chen, K.-Q. Zhang, H. Fuchs, L.-F. Chi, Sci. Rep. 2013, 3.

[15] A. Tuteja, W. Choi, M. Ma, J. M. Mabry, S. A. Mazzella, G. C. Rutledge, G. H. McKinley, R. E. Cohen, Science 2007, 318, 1618.

[16] T. L. Liu, C.-J. C. Kim, Science 2014, 346, 1096.

[17] X. Deng, L. Mammen, H. J. Butt, D. Vollmer, Science 2012, 335, 67.

[18] K. Golovin, D. H. Lee, J. M. Mabry, A. Tuteja, Angew. Chem. Int. Ed. 2013, 52, 13007.

[19] P. Silberzan, L. Leger, D. Ausserre, J. J. Benattar, Langmuir 1991, 7, 1647.

[20] K. M. Smyth, Wetting hysteresis and droplet roll off behavior on superhydrophobic surfaces, Massachusetts Institute of Technology, 2010.

[21] J. P. Zhang, S. Seeger, Angew. Chem. Int. Ed. 2011, 50, 6652.

[22] D. F. Cheng, C. Urata, B. Masheder, A. Hozumi, J. Am. Chem. Soc. 2012, 134, 10191.

[23] D. F. Cheng, C. Urata, M. Yagihashi, A. Hozumi, Angew. Chem. Int. Ed. 2012, 51, 2956.

[24] C. Urata, B. Masheder, D. F. Cheng, D. F. Miranda, G. J. Dunderdale, T. Miyamae, A. Hozumi, Langmuir 2014, 30, 4049.

[25] T.-S. Wong, S. H. Kang, S. K. Y. Tang, E. J. Smythe, B. D. Hatton, A. Grinthal, J. Aizenberg, Nature 2011, 477, 443.

[26] N. Vogel, R. A. Belisle, B. Hatton, T. S. Wong, J. Aizenberg, Nat. Commun. 2013, 4.

[27] A. Eifert, D. Paulssen, S. N. Varanakkottu, T. Baier, S. Hardt, Adv. Mat. Inter. 2014, 1, 1300138.

[28] P. A. Levkin, F. Svec, J. M. J. Fréchet, Adv. Funct. Mater. 2009, 19, 1993.

[29] J. Huang, F. Kim, A. R. Tao, S. Connor, P. Yang, Nat Mater 2005, 4, 896.

[30] J. Huang, R. Fan, S. Connor, P. Yang, Angew. Chem. Int. Ed. 2007, 46, 2414.

[31] Z. Zhan, Y. Lei, ACS Nano 2014, 8, 3862.

[32] X. Shen, C.-M. Ho, T.-S. Wong, J. Phys. Chem. B 2010, 114, 5269.

[33] http://www.surface-tension.de/

[34] P. Silberzan, L. Leger, D. Ausserre, J. J. Benattar, Langmuir 1991, 7, 1647.

[35] W. Feng, L. Li, E. Ueda, J. Li, S. Heißler, A. Welle, O. Trapp, P. A. Levkin, Adv. Mater. Inter. 2014, 1, 1400269.

[36] Gold substrate (100 nm Au/5 nm Ti evaporated on glass slide) was provided by Dr. Zhenbang Wang (Wöll group) from the Karlsruhe Institute of Technology,

[37] S. Sun, H. Zeng, D. B. Robinson, S. Raoux, P. M. Rice, S. X. Wang, G. Li, J. Am. Chem. Soc. 2004, 126, 273.

## Claims

1. A patterned substrate including a flat surface having a patterned coating, the patterned coating comprising

   (i) hydrophilic areas including hydrophilic thioether groups; surrounded by
   (ii) hydrophobic areas including hydrophobic thioether groups separating the hydrophilic areas into a predetermined spatial pattern,
   wherein the hydrophilic and hydrophobic thioether groups are covalently bound to the surface of the substrate via a dialkyl silyl linker, wherein the covalent bond is formed between the silicon atom of the linker and an oxygen atom of the substrate, wherein the surface of the substrate is a glass surface,
   and
   wherein the transmittance of the patterned substrate is at least 90% in the visible light range, i.e. 300 to 700 nm, and
   wherein the patterned substrate has a non-porous solid surface.

2. The patterned substrate according to claim 1, wherein

   the hydrophilic thioether group is functionalized or unfunctionalized alkyl thioyl; and
   the hydrophobic thioether group is polyfluoroalkyl thioyl.

3. A method for producing the patterned substrate according to claim 1 or 2 comprising the steps of

   (A) providing a substrate including a surface having hydroxyl groups or silanol groups;
   (B) contacting the surface having hydroxyl groups or silanol groups with a halo dialkyl alkenyl silane to form dialkyl alkenyl silyl moieties on the surface;
   (C) selectively reacting the alkenyl groups of a part of the dialkyl alkenyl silyl moieties with a hydrophobic thiol to hydrophobic thioether groups;
   (D) reacting the alkenyl groups of the remainder of the dialkyl alkenyl silyl moieties with a hydrophilic thiol to hydrophilic thioether groups,

wherein the patterned substrate has a non-porous solid surface.

4. The method according to claim 3,

wherein step (C) comprises the steps of
(C1) applying the hydrophobic thiol to the surface having dialkyl alkenyl silyl moieties;
(C2) covering the surface with the hydrophobic thiol with a photomask;
(C3) irradiating the surface with the hydrophobic thiol and the photomask with UV light; and
(C4) removing the photomask.

5. The method according to claim 3 or 4,

wherein step (D) comprises the steps of
(D1) applying the hydrophilic thiol to the surface having the remainder of the dialkyl alkenyl silyl moieties; and
(D2) irradiating the surface with the hydrophilic thiol with UV light.

6. A method for forming an array of separated homogenous non-aqueous fluid microdroplets of a desired shape and size in a desired spatial pattern, comprising the steps of:

(a) providing a patterned substrate according to claim 1 or 2;

wherein the hydrophilic areas have the desired shape and size and
the hydrophobic areas separate the hydrophilic areas into the desired spatial pattern;

and
(b) applying the non-aqueous fluid to a multitude of the hydrophilic areas at the same time.

7. The method according to claim 6;
wherein the non-aqueous fluid has a surface tension which is lower than the surface tension of water.

8. The method according to claim 6 or 7;
wherein the non-aqueous fluid has a surface tension of at least 18.4 and less than 72.2 mN m$^{-1}$.

9. The method according to any one of claims 6 to 8;
wherein the hydrophilic areas have at least one compound absorbed thereto which can diffuse into the non-aqueous fluid microdroplets formed.

10. The method according to any one of claims 6 to 9;
wherein the at least one compound is selected from the group consisting of chemical compounds, pharmaceutically active agents, biologically active agents, toxins, crosslinkers, polymers and mixtures thereof.

11. The method according to any one of claims 6 to 10;
further comprising the step of
(c) collecting analytical data from one or more of the microdroplets.

**Patentansprüche**

1. Strukturiertes Substrat, enthaltend eine flache Oberfläche mit einer strukturierten Beschichtung, wobei die strukturierte Beschichtung

(i) hydrophile Bereiche, enthaltend hydrophile Thioethergruppen; umgeben von
(ii) hydrophoben Bereichen, enthaltend hydrophobe Thioethergruppen, die die hydrophilen Bereiche in einer vorbestimmten räumlichen Struktur trennen,

umfasst,

wobei die hydrophilen und hydrophoben Thioethergruppen kovalent an die Oberfläche des Substrats über einen Dialkylsilyl-Linker gebunden sind, wobei die kovalente Bindung zwischen dem Siliziumatom des Linkers und einem Sauerstoffatom des Substrats gebildet ist, wobei die Oberfläche des Substrats eine Glasoberfläche ist,
und
wobei der Transmissionsgrad des strukturierten Substrats mindestens 90% im Bereich des sichtbaren Lichts, d.h. 300 bis 700 nm, beträgt, und wobei das strukturierte Substrat eine nicht-poröse feste Oberfläche aufweist.

2. Strukturiertes Substrat nach Anspruch 1, wobei

die hydrophile Thioethergruppe funktionalisiertes oder unfunktionalisiertes Alkylthioyl ist; und
die hydrophobe Thioethergruppe Polyfluoralkylthioyl ist.

3. Verfahren zur Herstellung des strukturierten Substrats nach Anspruch 1 oder 2, umfassend die Schritte

(A) des Bereitstellens eines Substrats, enthaltend eine Oberfläche mit Hydroxylgruppen oder Silanolgruppen;
(B) des Inkontaktbringens der Oberfläche, die Hydroxylgruppen oder Silanolgruppen aufweist, mit einem Halodialkylalkenylsilan zur Bildung von Dialkylalkenylsilyl-Einheiten auf der Oberfläche;
(C) des selektiven Umsetzens der Alkenylgruppen eines Teils der Dialkylalkenylsilyl-Einheiten mit einem hydrophoben Thiol zu hydrophoben Thioethergruppen;

(D) des Umsetzens der Alkenylgruppen des Rests der Dialkylalkenylsilyl-Einheiten mit einem hydrophilen Thiol zu hydrophilen Thioethergruppen,

wobei das strukturierte Substrat eine nicht-poröse feste Oberfläche aufweist.

4. Verfahren nach Anspruch 3,

wobei Schritt (C) die Schritte

(C1) des Aufbringens des hydrophoben Thiols auf die Oberfläche mit Dialkylalkenylsilyl-Einheiten;

(C2) des Bedeckens der Oberfläche mit dem hydrophoben Thiol mit einer Fotomaske;

(C3) des Bestrahlens der Oberfläche mit dem hydrophoben Thiol und der Fotomaske mit UV-Licht; und

(C4) des Entfernens der Fotomaske

umfasst.

5. Verfahren nach Anspruch 3 oder 4,

wobei Schritt (D) die Schritte

(D1) des Aufbringens des hydrophilen Thiols auf die Oberfläche mit dem Rest der Dialkylalkenylsilyl-Einheiten; und

(D2) des Bestrahlens der Oberfläche mit dem hydrophilen Thiol mit UV-Licht umfasst.

6. Verfahren zur Bildung einer Anordnung von getrennten homogenen, nichtwässrigen Flüssigkeitsmikrotröpfchen einer gewünschten Form und Größe in einer gewünschten räumlichen Struktur, umfassend die Schritte:

(a) des Bereitstellens eines strukturierten Substrats nach Anspruch 1 oder 2;

wobei die hydrophilen Bereiche die gewünschte Form und Größe aufweisen und die hydrophoben Bereiche die hydrophilen Bereiche in die gewünschte räumliche Struktur trennen;

und

(b) des Aufbringens der nichtwässrigen Flüssigkeit auf eine Mehrzahl der hydrophilen Bereiche zur gleichen Zeit.

7. Verfahren nach Anspruch 6; wobei die nichtwässrige Flüssigkeit eine Oberflächenspannung aufweist, die niedriger ist als die Oberflächenspannung von Wasser.

8. Verfahren nach Anspruch 6 oder 7; wobei die nichtwässrige Flüssigkeit eine Oberflächenspannung von mindestens 18,4 und weniger als 72,2 mN m$^{-1}$ aufweist.

9. Verfahren nach einem der Ansprüche 6 bis 8; wobei die hydrophilen Bereiche mindestens eine daran absorbierte Verbindung aufweisen, die in die gebildeten nichtwässrigen Flüssigkeitsmikrotröpfchen diffundieren kann.

10. Verfahren nach einem der Ansprüche 6 bis 9; wobei die mindestens eine Verbindung ausgewählt ist aus der Gruppe, bestehend aus chemischen Verbindungen, pharmazeutisch aktiven Wirkstoffen, biologisch aktiven Wirkstoffen, Toxinen, Vernetzern, Polymeren und Gemischen davon.

11. Verfahren nach einem der Ansprüche 6 bis 10;

weiter umfassend den Schritt

(c) des Sammelns analytischer Daten von einem oder mehreren der Mikrotröpfchen.

**Revendications**

1. Substrat à motif incluant une surface plate ayant un revêtement à motif, le revêtement à motif comprenant

(i) des zones hydrophiles incluant des groupes thioéther hydrophiles ; entourées de

(ii) zones hydrophobes incluant des groupes thioéther hydrophobes séparant les zones hydrophiles en un motif spatial prédéterminé,

dans lequel les groupes thioéther hydrophiles et hydrophobes sont liés par covalence à la surface du substrat par le biais d'un coupleur dialkyle silyle, dans lequel la liaison covalente est formée entre l'atome de silicium du coupleur et un atome d'oxygène du substrat, dans lequel la surface du substrat est une surface de verre, et

dans lequel la transmittance du substrat à motif est d'au moins 90 % dans la plage de lumière visible, c'est-à-dire 300 à 700 nm, et

dans lequel le substrat à motif a une surface solide non poreuse.

2. Substrat à motif selon la revendication 1, dans lequel

le groupe thioéther hydrophile est de l'alkyle thioyle fonctionnalisé ou non fonctionnalisé ; et

le groupe thioéther hydrophobe est du polyfluoroalkyle thioyle.

3. Procédé de production du substrat à motif selon la revendication 1 ou 2 comprenant les étapes consistant à

(A) fournir un substrat incluant une surface ayant des groupes hydroxyle ou groupes silanol ;
(B) mettre en contact la surface ayant des groupes hydroxyle ou groupes silanol avec un halogéno dialkyle alkényle silane pour former des groupes fonctionnels dialkyle alkényle silyle sur la surface ;
(C) faire réagir sélectivement les groupes alkényle d'une partie des groupes fonctionnels dialkyle alkényle silyle avec un thiol hydrophobe en groupes thioéther hydrophobes ;
(D) faire réagir les groupes alkényle du reste des groupes fonctionnels dialkyle alkényle silyle avec un thiol hydrophile en groupes thioéther hydrophiles,

dans lequel le substrat à motif a une surface solide non poreuse.

4. Procédé selon la revendication 3,

dans lequel l'étape (C) comprend les étapes consistant à
(C1) appliquer le thiol hydrophobe à la surface ayant des groupes fonctionnels dialkyle alkényle silyle ;
(C2) recouvrir la surface avec le thiol hydrophobe d'un masque photographique ;
(C3) irradier la surface avec le thiol hydrophobe et le masque photographique avec de la lumière UV ; et
(C4) retirer le masque photographique.

5. Procédé selon la revendication 3 ou 4,

dans lequel l'étape (D) comprend les étapes consistant à
(D1) appliquer le thiol hydrophile à la surface ayant le reste des groupes fonctionnels dialkyle alkényle silyle ; et
(D2) irradier la surface avec le thiol hydrophile avec de la lumière UV.

6. Procédé de formation d'une série de microgouttelettes de fluide non aqueux homogènes séparées d'une forme et taille souhaitées en un motif spatial souhaité, comprenant les étapes consistant à :

(a) fournir un substrat à motif selon la revendication 1 ou 2 ;
dans lequel les zones hydrophiles ont la forme et taille souhaitées et les zones hydrophobes séparent les zones hydrophiles en le motif spatial souhaité ;
et
(b) appliquer le fluide non aqueux à une multitude des zones hydrophiles en même temps.

7. Procédé selon la revendication 6,
dans lequel le fluide non aqueux a une tension de surface qui est inférieure à la tension de surface de l'eau.

8. Procédé selon la revendication 6 ou 7,
dans lequel le fluide non aqueux a une tension de surface d'au moins 18,4 et inférieure à 72,2 mN m$^{-1}$.

9. Procédé selon l'une quelconque des revendications 6 à 8,
dans lequel les zones hydrophiles ont au moins un composé absorbé sur elles qui peut se diffuser dans les microgouttelettes de fluide non aqueux formées.

10. Procédé selon l'une quelconque des revendications 6 à 9,
dans lequel l'au moins un composé est sélectionné parmi le groupe constitué de composés chimiques, agents pharmaceutiquement actifs, agents biologiquement actifs, toxines, agents de réticulation, polymères et mélanges de ceux-ci.

11. Procédé selon l'une quelconque des revendications 6 à 10,
comprenant en outre l'étape consistant à
(c) recueillir des données analytiques d'une ou plusieurs des microgouttelettes.

**Figure 1**

## Figure 2

(A)                                    bulk solution        microdroplets array

(B)                                                    hexadecane
                                                       $\gamma_{lv}$=27.5 mN m$^{-1}$

(C)

(D)

| acetone | ethanol | hexane |
|---------|---------|--------|
| $\gamma_{lv}$=25.2 mN m$^{-1}$ | $\gamma_{lv}$=22.1 mN m$^{-1}$ | $\gamma_{lv}$=18.4 mN m$^{-1}$ |

(E)          ↓20 µm

(F)          1000

diameter d/µm        height h/µm

1000

54

(G)

distance

(H)        bare glass
           PEDT-modified
           glass
           porous surface
           ----gold substrate

Transparency (%)

wavelength (nm)

**Figure 3**

**Figure 4**

(A)

solvent evaporation

nanoparticle suspension
microdroplets

2-dimension
nanoparticle array

## Figure 5

(A) UV irradiation

monomer solution
microdroplets

polymer micropads
array

(B)

(C) d=33.4±0.4 μm
h=1.9±0.02 μm

(D)

objective
lens

projection
template

(E)

(F)

**Figure 6**

## Figure 7

|  | water static<br>contact angle | hexadecane static<br>contact angle |
|---|---|---|
| bare glass | $\theta_{st}=45\degree$ | $\theta_{st}=2\degree$ |
| after silane<br>modification | $\theta_{st}=84\degree$ | $\theta_{st}=15\degree$ |
| PFDT<br>modified glass | $\theta_{st}=92\degree$ | $\theta_{st}=38\degree$ |
| cysteamine<br>modified glass | $\theta_{st}=62\degree$ | $\theta_{st}=5\degree$ |

**Figure 8**

1 mm

Biotin-PEG-thiol

**Figure 9**

**Figure 10**

Figure 11

(A)

(B) after 100 tape peel tests

## REFERENCES CITED IN THE DESCRIPTION

**Patent documents cited in the description**

- EP 2952267 A

- US 2013078711 A

**Non-patent literature cited in the description**

- **R. J. JACKMAN ; D. C. DUFFY ; E. OSTUNI ; N. D. WILLMORE ; G. M. WHITESIDES.** *Anal. Chem.,* 1998, vol. 70, 2280
- **E. UEDA ; F. L. GEYER ; V. NEDASHKIVSKA ; P. A. LEVKIN.** *Lab Chip,* 2012, vol. 12, 5218
- **S. P. R. KOBAKU ; A. K. KOTA ; D. H. LEE ; J. M. MABRY ; A. TUTEJA.** *Angew. Chem. Int. Ed.,* 2012, vol. 51, 10109
- **S. P. R. KOBAKU ; G. KWON ; A. K. KOTA ; R. G. KARUNAKARAN ; P. WONG ; D. H. LEE ; A. TUTEJA.** *ACS Appl. Mater. Interfaces,* 2015, vol. 7, 4075
- **Y. XIA ; D. QIN ; Y. YIN.** *Curr. Opin. Colloid Interface Sci.,* 2001, vol. 6, 54
- **S.-W. HU ; B.-Y. XU ; W.-K. YE ; X.-H. XIA ; H.-Y. CHEN ; J.-J. XU.** *ACS Appl. Mater. Interfaces,* 2015, vol. 7, 935
- **A. A. POPOVA ; S. M. SCHILLO ; K. DEMIR ; E. UEDA ; A. NESTEROV-MUELLER ; P. A. LEVKIN.** *Adv. Mat.,* 2015, vol. 27, 5217
- **W. FENG ; L. LI ; C. YANG ; A. WELLE ; O. TRAPP ; P. A. LEVKIN.** *Angew. Chem. Int. Ed.,* 2015, vol. 54, 8732
- **F. L. GEYER ; E. UEDA ; U. LIEBEL ; N. GRAU ; P. A. LEVKIN.** *Angew. Chem. Int. Ed.,* 2011, vol. 50, 8424
- **W. FENG ; L. LI ; E. UEDA ; J. LI ; S. HEIßLER ; A. WELLE ; O. TRAPP ; P. A. LEVKIN.** *Adv. Mater. Inter.,* 2014, vol. 1, 1400269
- **H. LI ; Q. YANG ; G. LI ; M. LI ; S. WANG ; Y. SONG.** *ACS Appl. Mater. Interfaces,* 2015, vol. 7, 9060
- **Y. DU ; M. GHODOUSI ; E. LO ; M. K. VIDULA ; O. EMIROGLU ; A. KHADEMHOSSEINI.** *Biotechnol. Bioeng.,* 2010, vol. 105, 655
- **H. A. BIEBUYCK ; G. M. WHITESIDES.** *Langmuir,* 1994, vol. 10, 2790
- **Y.-K. LAI ; Y.-X. TANG ; J.-Y. HUANG ; F. PAN ; Z. CHEN ; K.-Q. ZHANG ; H. FUCHS ; L.-F. CHI.** *Sci. Rep.,* 2013, vol. 3
- **A. TUTEJA ; W. CHOI ; M. MA ; J. M. MABRY ; S. A. MAZZELLA ; G. C. RUTLEDGE ; G. H. MCKINLEY ; R. E. COHEN.** *Science,* 2007, vol. 318, 1618

- **T. L. LIU ; C.-J. C. KIM.** *Science,* 2014, vol. 346, 1096
- **X. DENG ; L. MAMMEN ; H. J. BUTT ; D. VOLLMER.** *Science,* 2012, vol. 335, 67
- **K. GOLOVIN ; D. H. LEE ; J. M. MABRY ; A. TUTEJA.** *Angew. Chem. Int. Ed.,* 2013, vol. 52, 13007
- **P. SILBERZAN ; L. LEGER ; D. AUSSERRE ; J. J. BENATTAR.** *Langmuir,* 1991, vol. 7, 1647
- **K. M. SMYTH.** Wetting hysteresis and droplet roll off behavior on superhydrophobic surfaces. Massachusetts Institute of Technology, 2010
- **J. P. ZHANG ; S. SEEGER.** *Angew. Chem. Int. Ed.,* 2011, vol. 50, 6652
- **D. F. CHENG ; C. URATA ; B. MASHEDER ; A. HOZUMI.** *J. Am. Chem. Soc.,* 2012, vol. 134, 10191
- **D. F. CHENG ; C. URATA ; M. YAGIHASHI ; A. HOZUMI.** *Angew. Chem. Int. Ed.,* 2012, vol. 51, 2956
- **C. URATA ; B. MASHEDER ; D. F. CHENG ; D. F. MIRANDA ; G. J. DUNDERDALE ; T. MIYAMAE ; A. HOZUMI.** *Langmuir,* 2014, vol. 30, 4049
- **T.-S. WONG ; S. H. KANG ; S. K. Y. TANG ; E. J. SMYTHE ; B. D. HATTON ; A. GRINTHAL ; J. AIZENBERG.** *Nature,* 2011, vol. 477, 443
- **N. VOGEL ; R. A. BELISLE ; B. HATTON ; T. S. WONG ; J. AIZENBERG.** *Nat. Commun.,* 2013, vol. 4
- **A. EIFERT ; D. PAULSSEN ; S. N. VARANAKKOTTU ; T. BAIER ; S. HARDT.** *Adv. Mat. Inter.,* 2014, vol. 1, 1300138
- **P. A. LEVKIN ; F. SVEC ; J. M. J. FRÉCHET.** *Adv. Funct. Mater.,* 2009, vol. 19, 1993
- **J. HUANG ; F. KIM ; A. R. TAO ; S. CONNOR ; P. YANG.** *Nat Mater,* 2005, vol. 4, 896
- **J. HUANG ; R. FAN ; S. CONNOR ; P. YANG.** *Angew. Chem. Int. Ed.,* 2007, vol. 46, 2414
- **Z. ZHAN ; Y. LEI.** *ACS Nano,* 2014, vol. 8, 3862
- **X. SHEN ; C.-M. HO ; T.-S. WONG.** *J. Phys. Chem.,* 2010, vol. 114, 5269
- **DR. ZHENBANG WANG.** *Gold substrate (100 nm Au/5 nm Ti evaporated on glass slide*

- **S. SUN ; H. ZENG ; D. B. ROBINSON ; S. RAOUX ; P. M. RICE ; S. X. WANG ; G. LI.** *J. Am. Chem. Soc.,* 2004, vol. 126, 273